# EUROPEAN PATENT APPLICATION

(11) **EP 4 465 712 A1**
(43) Date of publication of application: **20.11.2024**
(21) Application number: 24170381.8
(22) Date of filing: 16.04.2024
(51) Int. Cl.: H04W 64/00, H04L 5/00, H04W 92/18

(54) **METHOD FOR SIDELINK POSITIONING REFERENCE SIGNAL MEASUREMENT COMBINING ACROSS SIDELINK POSITIONING REFERENCE SIGNAL RESOURCES**

(30) Priority: 19.05.2023 US 202363467658 P
(71) Applicant: Nokia Technologies Oy, 02610 Espoo (FI)
(72) Inventor: KEATING, Ryan, Chicago (US); CHA, Hyun-Su, Naperville (US)
(74) Representative: Nokia EPO representatives

(57) **Abstract**

Systems, methods, apparatuses, and computer program products for combining SL PRS measurements across SL PRS resources. One method may include receiving, from a user equipment, at least one indication indicating at least one sidelink positioning reference signal resource that is combinable; determining, based on the at least one indication, a plurality of combinable sidelink positioning reference signal resources; performing at least one sidelink positioning measurement utilizing the plurality of combinable sidelink positioning reference signal resources; and transmitting, to the user equipment, a report comprising the at least one sidelink positioning measurement and at least one of the following: at least one used sidelink positioning reference signal resource indication or at least one slot index associated with the sidelink positioning measurement.

## Description

### RELATED APPLICATION

This application claims priority to US provisional Application No. 63/467658 filed May 19, 2023, which is incorporated herein by reference in its entirety.

### TECHNICAL FIELD

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for combining sidelink (SL) positioning reference signal (PRS) measurements across SL PRS resources.

### BACKGROUND

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY

In accordance with some example embodiments, a method may include receiving, from a user equipment, at least one indication indicating at least one sidelink positioning reference signal resource that is combinable. The method may further include determining, based on the at least one indication, a plurality of combinable sidelink positioning reference signal resources. The method may further include performing at least one sidelink positioning measurement utilizing the plurality of combinable sidelink positioning reference signal resources. The method may further include transmitting, to the user equipment, a report comprising the at least one sidelink positioning measurement and at least one of the following: at least one used sidelink positioning reference signal resource indication or at least one slot index associated with the sidelink positioning measurement.

In accordance with certain example embodiments, an apparatus may include means for receiving, from a user equipment, at least one indication indicating at least one sidelink positioning reference signal resource that is combinable. The apparatus may further include means for determining, based on the at least one indication, a plurality of combinable sidelink positioning reference signal resources. The apparatus may further include means for performing at least one sidelink positioning measurement utilizing the plurality of combinable sidelink positioning reference signal resources. The apparatus may further include means for transmitting, to the user equipment, a report comprising the at least one sidelink positioning measurement and at least one of the following: at least one used sidelink positioning reference signal resource indication or at least one slot index associated with the sidelink positioning measurement.

In accordance with various example embodiments, a non-transitory computer readable medium may include program instructions that, when executed by an apparatus, cause the apparatus to perform at least a method. The method may include receiving, from a user equipment, at least one indication indicating at least one sidelink positioning reference signal resource that is combinable. The method may further include determining, based on the at least one indication, a plurality of combinable sidelink positioning reference signal resources. The method may further include performing at least one sidelink positioning measurement utilizing the plurality of combinable sidelink positioning reference signal resources. The method may include transmitting, to the user equipment, a report comprising the at least one sidelink positioning measurement and at least one of the following: at least one used sidelink positioning reference signal resource indication or at least one slot index associated with the sidelink positioning measurement.

In accordance with some example embodiments, a computer program product may perform a method. The method may include receiving, from a user equipment, at least one indication indicating at least one sidelink positioning reference signal resource that is combinable. The method may further include determining, based on the at least one indication, a plurality of combinable sidelink positioning reference signal resources. The method may further include performing at least one sidelink positioning measurement utilizing the plurality of combinable sidelink positioning reference signal resources. The method may include transmitting, to the user equipment, a report comprising the at least one sidelink positioning measurement and at least one of the following: at least one used sidelink positioning reference signal resource indication or at least one slot index associated with the sidelink positioning measurement.

In accordance with certain example embodiments, an apparatus may include at least one processor and at least one memory storing instructions that, when executed by the at least one processor, cause the apparatus at least to receive, from a user equipment, at least one indication indicating at least one sidelink positioning reference signal resource that is combinable. The at least one memory and instructions, when executed by the at least one processor, may further cause the apparatus at least to determine, based on the at least one indication, a plurality of combinable sidelink positioning reference signal resources. The at least one memory and instructions, when executed by the at least one processor, may further cause the apparatus at least to perform at least one sidelink positioning measurement utilizing the plurality of combinable sidelink positioning reference signal resources. The at least one memory and instructions, when executed by the at least one processor, may further cause the apparatus at least to transmit, to the user equipment, a report comprising the at least one sidelink positioning measurement and at least one of the following: at least one used sidelink positioning reference signal resource indication or at least one slot index associated with the sidelink positioning measurement.

In accordance with various example embodiments, an apparatus may include receiving circuitry configured to receive, from a user equipment, at least one indication indicating at least one sidelink positioning reference signal resource that is combinable. The apparatus may further include determining circuitry configured to determine, based on the at least one indication, a plurality of combinable sidelink positioning reference signal resources. The apparatus may further include performing circuitry configured to perform at least one sidelink positioning measurement utilizing the plurality of combinable sidelink positioning reference signal resources. The apparatus may further include transmitting circuitry configured to transmit, to the user equipment, a report comprising the at least one sidelink positioning measurement and at least one of the following: at least one used sidelink positioning reference signal resource indication or at least one slot index associated with the sidelink positioning measurement.

In accordance with some example embodiments, a method may include transmitting, to a user equipment, at least one indication indicating at least one sidelink positioning reference signal resource that is combinable. The method may further include receiving, from the user equipment, a report comprising at least one sidelink positioning measurement and at least one of the following: at least one sidelink positioning reference signal resource indication or at least one slot index associated with the sidelink positioning measurement.

In accordance with certain example embodiments, an apparatus may include means for transmitting, to a user equipment, at least one indication indicating at least one sidelink positioning reference signal resource that is combinable. The apparatus may further include means for receiving, from the user equipment, a report comprising at least one sidelink positioning measurement and at least one of the following: at least one sidelink positioning reference signal resource indication or at least one slot index associated with the sidelink positioning measurement.

In accordance with various example embodiments, a non-transitory computer readable medium may include program instructions that, when executed by an apparatus, cause the apparatus to perform at least a method. The method may include transmitting, to a user equipment, at least one indication indicating at least one sidelink positioning reference signal resource that is combinable. The method may further include receiving, from the user equipment, a report comprising at least one sidelink positioning measurement and at least one of the following: at least one sidelink positioning reference signal resource indication or at least one slot index associated with the sidelink positioning measurement.

In accordance with some example embodiments, a computer program product may perform a method. The method may include transmitting, to a user equipment, at least one indication indicating at least one sidelink positioning reference signal resource that is combinable. The method may further include receiving, from the user equipment, a report comprising at least one sidelink positioning measurement and at least one of the following: at least one sidelink positioning reference signal resource indication or at least one slot index associated with the sidelink positioning measurement.

In accordance with certain example embodiments, an apparatus may include at least one processor and at least one memory storing instructions that, when executed by the at least one processor, cause the apparatus at least to transmit, to a user equipment, at least one indication indicating at least one sidelink positioning reference signal resource that is combinable. The at least one memory and instructions, when executed by the at least one processor, may further cause the apparatus at least to receive, from the user equipment, a report comprising at least one sidelink positioning measurement and at least one of the following: at least one sidelink positioning reference signal resource indication or at least one slot index associated with the sidelink positioning measurement.

In accordance with various example embodiments, an apparatus may include transmitting circuitry configured to transmit, to a user equipment, at least one indication indicating at least one sidelink positioning reference signal resource that is combinable. The apparatus may further include receiving circuitry configured to receive, from the user equipment, a report comprising at least one sidelink positioning measurement and at least one of the following: at least one sidelink positioning reference signal resource indication or at least one slot index associated with the sidelink positioning measurement.

### BRIEF DESCRIPTION OF THE DRAWINGS

For a proper understanding of example embodiments, reference should be made to the accompanying drawings, wherein:
FIG. 1 illustrates an example SL RTT positioning scenario;
FIG. 2 illustrates an example of the same SL PRS resource IDs used three times;
FIG. 3 illustrates an example of different SL PRS resource IDs used;
FIG. 4 illustrates an example of a signaling diagram according to certain example embodiments;
FIG. 5 illustrates an example of a flow diagram of a method according to various example embodiments;
FIG. 6 illustrates an example of a flow diagram of a method according to various example embodiments;
FIG. 7 illustrates an example of various network devices according to some example embodiments; and
FIG. 8 illustrates an example of a 5G network and system architecture according to certain example embodiments.

### DETAILED DESCRIPTION

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for combining SL PRS measurements across SL PRS resources is not intended to limit the scope of certain example embodiments, but is instead representative of selected example embodiments.

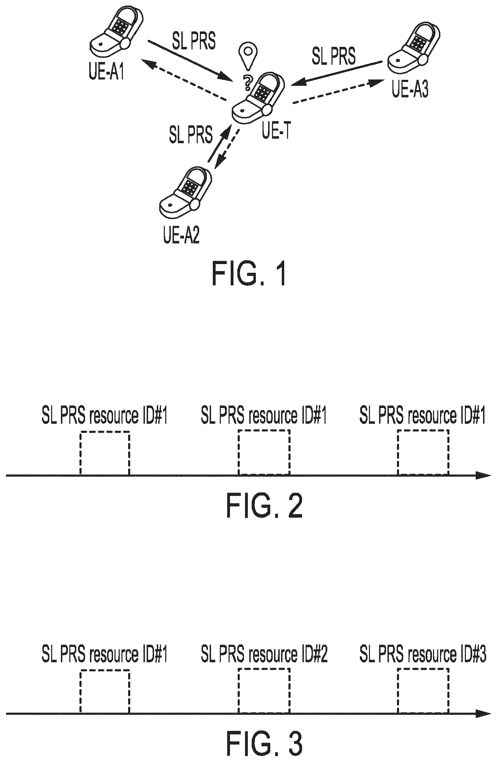

In general, SL positioning is based on the transmissions of SL PRS by multiple anchor UEs to be received by a target UE. This may occur using SL time difference of arrival (TDOA) methods and/or SL PRS exchanges between the anchor UEs and target UEs with SL multi-RTT methods to enable localization of the target UE and/or ranging of target UE with respect to a reference UE (*e.g*., anchor UE) within precise latency and accuracy requirements of the corresponding SL positioning. FIG. 1 illustrates a SL RTT positioning scenario where a target UE (*i*.*e.*, UE-T) performs SL positioning by receiving SL PRS from and transmitting SL PRS to three anchor UEs (*i.e.,* UE-A1, UE-A2 and UE-A3), and determines its location using SL RTT methods.

In Uu positioning, at least 4 samples (*i.e*., 4 instances of a given DL PRS resource) may be averaged to generate a given DL positioning measurement. The UE may measure multiple measurement samples of a specific reference signal to improve measurement accuracy, and with a defined minimum number of measurement samples. However, no such baseline currently exists for SL positioning measurements. A measurement sample may refer to one instance of a PRS resource (*i.e*., one occasion in the case of periodic transmission).

A UE may attempt to use multiple samples (*i.e*., multiple instances) of a SL PRS transmission to generate a SL positioning measurement; however, SL PRS ID may only be a unique parameter within one slot. FIG. 2 depicts an example of a UE that receives three separate instances of SL PRS resource ID#1. However, FIG. 2 illustrates that the Rx UE cannot assume anything about the relationship between these SL PRS resources even though they share the same ID. Thus, even if the same parameters are associated with each SL PRS resource, there is no guarantee from the Rx UE point of view that the Tx UE used the same antenna or beam for these SL PRS resource transmissions. Through implementation, a UE could transmit SL PRS resource ID#1 in the first slot using panel #1; the same UE could then transmit SL PRS resource ID# 1 in the second slot using panel #2. This may result in a measurement error if the Rx UE averages the measurement using both the first and second slots. As a result, the Rx UE cannot merely average the measurements across these SL PRS resources despite sharing the same ID. Similarly, FIG. 3 depicts another scenario where the Rx UE receives three different SL PRS resource IDs from the same Tx UE. Even though these SL PRS resources have different resource IDs, the Rx UE may average a measurement using all of these receptions, but this may not be optimal.

Certain example embodiments described herein may have various benefits and/or advantages to overcome the disadvantages described above, including challenges with a Rx UE being unable to make any assumptions about whether measurement averaging across SL PRS resource IDs are the same or different. For example, certain example embodiments may enable SL positioning measurement averaging, and may improve positioning performance. Thus, certain example embodiments discussed below are directed to improvements in computer-related technology.

Some example embodiments may include signaling from a Tx UE to a Rx UE wherein SL PRS resource ID(s) can be assumed to be transmitted by the same antennas and/or beams. The Rx UE may use this information to determine which SL PRS resource(s) can be averaged (or combined) together to form a single SL positioning measurement. There are multiple options for how this signaling could be implemented. For example, some various example embodiments may use a combining flag associated with SL PRS resources (*i*.*e*., indicates whether a given instance of SL PRS resource can be combined with a previous instance of the same SL PRS resource ID from a given Tx UE). Certain example embodiments may use a time window (*i.e*., Tx UE indicates length of time in slots where Rx UE can assume that any SL PRS resources with the same ID can be coherently combined or averaged). Various example embodiments may use quasi co-location (QCL)-like information that indicates a reference signal (RS) for a given SL PRS resource ID. Based upon this QCL-like information, the Rx UE may assume that a SL PRS resource which has another SL PRS resource as a reference can be combined (or averaged) with the reference resource.

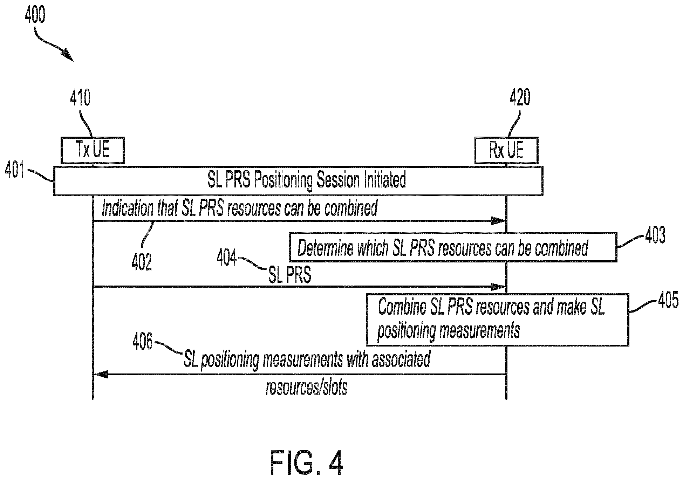

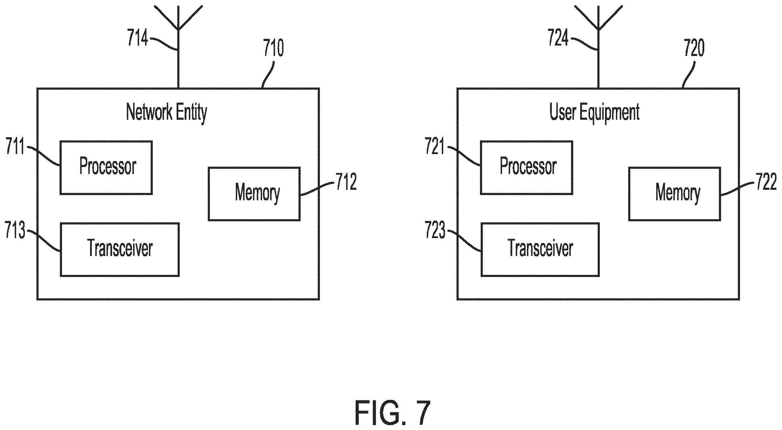

FIG. 4 illustrates an example of a signaling diagram depicting for combining SL PRS measurements across SL PRS resources. Tx UE 410 and Rx UE 420 may be similar to UE 720, as illustrated in FIG. 7, according to certain example embodiments.

At operation 401, Tx UE 410 and Rx UE 420 may initiate a SL positioning session.

At operation 402, Tx UE 410 may transmit to Rx UE 420 at least one indication indicating at least one SL PRS signal resource that is combinable, for example, at least one indication of which SL PRS resources can be combined or averaged over for a single SL positioning measurement. The indication may be transmitted by Tx UE 410 via higher layer signaling (*e.g.*, SLPP or RRC) and/or via physical layer signaling (*e.g*., SCI). In certain example embodiments, Tx UE 410 may also transmit to Rx UE 420 at least one resource identity associated with the at least one SL PRS signal resource that is combinable.

In certain example embodiments, the at least one indication may include at least one combining flag associated with SL PRS resources (*i.e*., indicates whether a given instance of SL PRS resource can be combined with a previous instance of the same SL PRS resource ID from Tx UE 410). For example, the combining flag may be included in the SL PRS resource configuration. If different SL PRS resources (*e.g*., transmitted from a single UE) have the same flag index, Rx UE 420 can use these SL PRS resources to get multiple measurement samples, and Rx UE 420 may determine a single measurement value to be reported (*e.g*., averaging the multiple samples). The SL PRS resources with the same flag index may cause Rx UE 420 to assume they are transmitted with a same beam and a same antenna port. In an example, the combining flag may use '0' and '1' in four different SL PRS resource IDs, such as (SL PRS resource#1, 0), (SL PRS resource#2, 0), (SL PRS resource #3, 1), and (SL PRS resource #4, 1). This combining flag may indicate to Rx UE 420 that SL PRS resource #1 and #2 would be transmitted with a same beam and same antenna port, so that Rx UE 420 can combine the measurement samples. At least two associated different SL PRS resources associated with a same flag index may be configured to enable or allow the apparatus to combine the SL PRS resources. An example of the combining may be to average the measurement samples obtained from the SL PRS resources with the same flag in order to determine a measurement to be reported.

In some example embodiments, the at least one indication may include at least one time window (*i.e.*, Tx UE 410 may indicate length of time in slots where Rx UE 420 can assume that any SL PRS resources with the same ID can be coherently combined or averaged). The at least one time window may use relatively low overhead, and may be an optional parameter as part of a SL PRS configuration. This time window may apply at the UE level (*i.e*., applies to all SL PRS resources from a given UE) and/or may be signaled per resource (*i.e*., applies only to a particular SL PRS resource ID).

In various example embodiments, the at least one indication may include QCL-like information which may indicate a RS for a given SL PRS resource ID. Rx UE 420 may assume a SL PRS resource which has another SL PRS resource as a reference may be combined and/or averaged with the reference resource. The QCL-like information may indicate to Rx UE 420 that the SL PRS is not only transmitted with the same beam (*i.e*., similar to QCL-Type-D in Uu), as well as that it is transmitted from the same antenna. As an example, if SL PRS#0 is a QCL-like reference for SL PRS#1 and PRS#2, Rx UE 420 may obtain and combine the measurements samples respectively obtained from them.

Multiple references may also be used with the QCL-like information to improve flexibility. An example may include SL PRS resource #1; SL PRS resource #2; SL PRS resource #3; SL PRS resource #4 (SL PRS #N is a QCL-like reference of SL PRS resource #N-1. When Tx UE 410 changes the QCL-like reference of SL PRS resource #2, Rx UE 420 may still able to assume (SL PRS resource #1 and #2) and (SL PRS resource #3 and #4) when combining measurements.

At operation 403, Rx UE 420 may receive the at least one indication from operation 402, and, based on the at least one indication, determine a plurality of combinable SL PRS resources.

At operation 404, Tx UE 410 may transmit SL PRS resources to Rx UE 420.

At operation 405, Rx UE 420 may combine SL PRS resources according to information determined at operation 403, and perform SL positioning measurements utilizing the plurality of combinable SL PRS resources. In various example embodiments, performing SL positioning measurements may include combining a plurality of measurement samples associated with the plurality of combinable SL PRS resources.

At operation 406, if Rx UE 420 reports the SL positioning measurements to another UE (*e.g*., server UE or Tx UE) or to an LMF, Rx UE 420 may include at least one used SL PRS resource ID, and associated slot indexes, which were combined to make the SL positioning measurement. In certain example embodiments, Rx UE 420 may transmit to Tx UE 410 a report comprising the SL positioning measurement and at least one of the following: at least one set of reference signal time difference, a SL time difference measurement, a SL angle of arrival (AoA) measurement, SL PRS identifier, and slot. For example, Rx UE 420 may combine SL PRS resource #1 in slot #1; SL PRS resource #2 in slot #2; and SL PRS resource #3 in slot #3 for a single SL PRS RSTD or Rx-Tx time difference measurement. Rx UE 420 may then signal {RSTD, (SL PRS 1, slot 1), (SL PRS 2, slot 2), (SL PRS 3, slot 3)} to the server UE or LMF.

In certain example embodiments, Rx UE 420 may perform operation 406 to the server UE, Tx UE, and/or LMF without knowing if those resources can be combined, without performing operation 402. In this case, the server UE or LMF may need to check with Tx UE 410 if those measurements were validly combined or not.

In some example embodiments, prior to operation 402, Rx UE 420 may be able to request a specific number of measurement samples for the measurement combining. If Rx UE 420 is configured to combine two measurement samples for a measurement, Tx UE 410 may need to consider what has been requested by Rx UE 420, which may result in reduced signaling overhead.

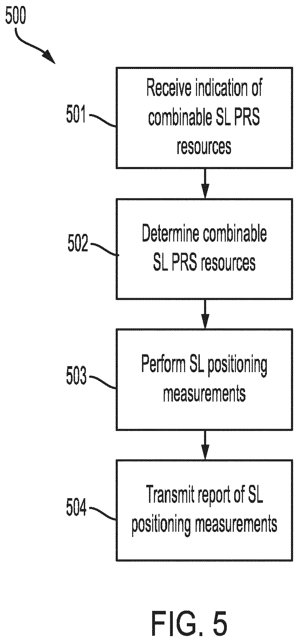

FIG. 5 illustrates an example of a flow diagram of a method 500 that may be performed by a UE, such as UE 720 illustrated in FIG. 7, according to various example embodiments.

At step 501, the method may include receiving, from a UE, such as UE 720 illustrated in FIG. 7, at least one indication indicating at least one SL PRS resource that is combinable. In various example embodiments, the method may further include receiving at least one resource identity associated with the at least one SL PRS resource that is combinable.

In certain example embodiments, the at least one indication may include at least one combining flag associated with at least one SL PRS resource. The at least one combining flag may be associated with at least one SL PRS resource configuration.

At least two different SL PRS resources associated with a same flag index may be configured to enable or allow the UE to combine a plurality of measurement samples associated with the at least associated two different SL PRS resources. The at least one time window associated with at least one SL PRS resource with the same identifier may be combinable within the at least one time window resource.

In some example embodiments, the at least one indication may include at least one reference SL PRS resource for at least one SL PRS resource. At least two different SL PRS resources associated with a same reference SL PRS resource may be configured to enable or allow the apparatus to combine a plurality of measurement samples associated with the at least associated two different SL PRS resources.

At step 502, the method may further include determining, based on the at least one indication, a plurality of combinable SL PRS resources.

At step 503, the method may further include performing at least one SL positioning measurement utilizing the plurality of combinable SL PRS resources. For example, performing SL positioning measurement may include combining a plurality of measurement samples associated with the plurality of combinable SL PRS resources.

At step 504, the method may further include transmitting, to the user equipment, a report comprising the at least one SL positioning measurement and at least one of the following: at least one used SL PRS resource indication or at least one slot index associated with the SL positioning measurement. The at least one report may include at least one set of reference signal time difference, a sidelink time difference measurement, a sidelink angle of arrival measurement, SL PRS identifier, and slot.

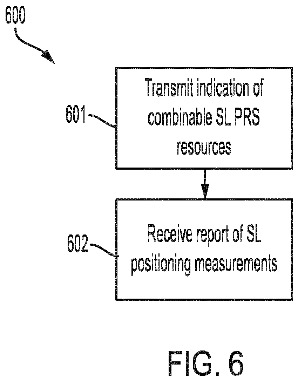

FIG. 6 illustrates an example of a flow diagram of a method 600 that may be performed by a UE, such as UE 720 illustrated in FIG. 7, according to various example embodiments.

At step 601, the method may include transmitting, to a user equipment, such as UE 720 illustrated in FIG. 7, at least one indication indicating at least one SL PRS resource that is combinable. In certain example embodiments, the method may further include transmitting at least one resource identity associated with the at least one SL PRS resource that is combinable.

At step 602, the method may further include receiving, from the user equipment, a report comprising at least one sidelink positioning measurement and at least one of the following: at least one SL PRS resource indication or at least one slot index associated with the sidelink positioning measurement. The at least one report may include at least one set of reference signal time difference, a sidelink time difference measurement, a sidelink angle of arrival measurement, SL PRS identifier, and slot.

The at least one indication may include at least one combining flag associated with at least one SL PRS resource. The at least one combining flag may be associated with at least one SL PRS resource configuration.

At least two different SL PRS resources associated with a same flag index may be configured to enable or allow the UE to combine a plurality of measurement samples associated with the at least associated two different SL PRS resources. The at least one indication may include at least one time window associated with at least one SL PRS resource with the same identifier that are combinable. The at least one time window associated with at least one SL PRS resource with the same identifier may be combinable within the at least one time window resource.

The at least one indication may include at least one reference SL PRS resource for at least one SL PRS resource. At least two different SL PRS resources associated with a same reference SL PRS resource may be configured to enable or allow the user equipment to combine a plurality of measurement samples associated with the at least two different SL PRS resources.

FIG. 7 illustrates an example of a system according to certain example embodiments. In one example embodiment, a system may include multiple devices, such as, for example, NE 710 and/or UE 720.

NE 710 may be one or more of a base station (*e.g.*, 3G UMTS NodeB, 4G LTE Evolved NodeB, or 5G NR Next Generation NodeB), a serving gateway, a server, and/or any other access node or combination thereof.

NE 710 may further include at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 710 and/or UE 720 may be one or more of a citizens broadband radio service device (CBSD).

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include computer program instructions or computer code contained therein. Memories 712 and 722 may independently be any suitable storage device, such as a non-transitory computer-readable medium. The term "non-transitory," as used herein, may correspond to a limitation of the medium itself (*i*.*e.*, tangible, not a signal) as opposed to a limitation on data storage persistency (*e.g*., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIG. 4. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e*., FIG. 4). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIG. 4. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g*., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

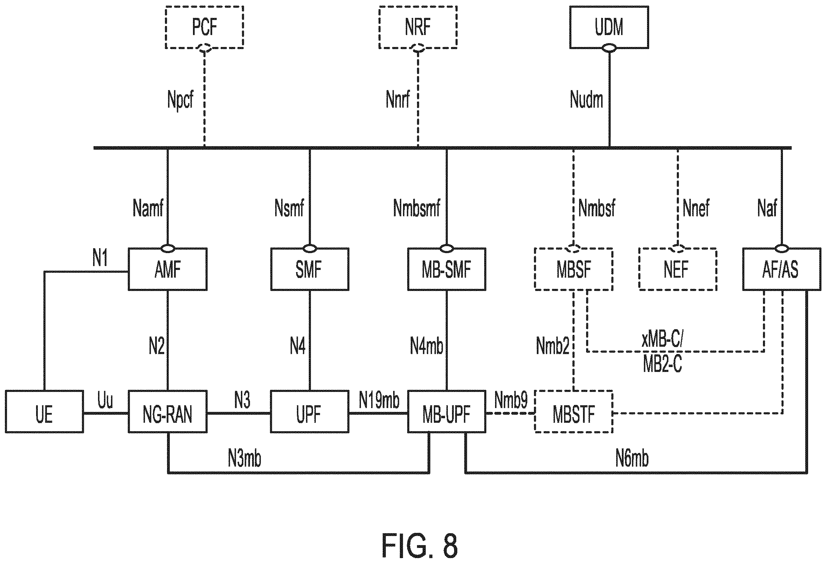

FIG. 8 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 8 may be similar to NE 710 and UE 720, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 711 and 721, and memories 712 and 722, may be included in or may form a part of processing circuitry or control circuitry. In addition, in some example embodiments, transceivers 713 and 723 may be included in or may form a part of transceiving circuitry.

In some example embodiments, an apparatus (*e.g*., NE 710 and/or UE 720) may include means for performing a method, a process, or any of the variants discussed herein. Examples of the means may include one or more processors, memory, controllers, transmitters, receivers, and/or computer program code for causing the performance of the operations.

In various example embodiments, apparatus 720 may be controlled by memory 722 and processor 721 to receive, from a user equipment, at least one indication indicating at least one SL PRS resource that is combinable; determine, based on the at least one indication, a plurality of combinable SL PRS resources; perform at least one sidelink positioning measurement utilizing the plurality of combinable SL PRS resources; and transmit, to the user equipment, a report comprising the at least one sidelink positioning measurement and at least one of the following: at least one used SL PRS resource indication or at least one slot index associated with the sidelink positioning measurement.

Certain example embodiments may be directed to an apparatus that includes means for performing any of the methods described herein including, for example, means for receiving, from a user equipment, at least one indication indicating at least one SL PRS resource that is combinable; means for determining, based on the at least one indication, a plurality of combinable SL PRS resources; means for performing at least one sidelink positioning measurement utilizing the plurality of combinable SL PRS resources; and means for transmitting, to the user equipment, a report comprising the at least one sidelink positioning measurement and at least one of the following: at least one used SL PRS resource indication or at least one slot index associated with the sidelink positioning measurement.

In various example embodiments, apparatus 720 may be controlled by memory 722 and processor 721 to transmit, to a user equipment, at least one indication indicating at least one SL PRS resource that is combinable; and receive, from the user equipment, a report comprising at least one sidelink positioning measurement and at least one of the following: at least one SL PRS resource indication or at least one slot index associated with the sidelink positioning measurement.

Certain example embodiments may be directed to an apparatus that includes means for performing any of the methods described herein including, for example, means for transmitting, to a user equipment, at least one indication indicating at least one SL PRS resource that is combinable; and means for receiving, from the user equipment, a report comprising at least one sidelink positioning measurement and at least one of the following: at least one SL PRS resource indication or at least one slot index associated with the sidelink positioning measurement.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3^{rd} Generation Partnership Project
- 5G: 5^{th} Generation
- SGC: 5^{th} Generation Core
- 6G: 6^{th} Generation
- AF: Application Function
- ASIC: Application Specific Integrated Circuit
- CBSD: Citizens Broadband Radio Service Device
- CPU: Central Processing Unit
- CU: Centralized Unit
- DL: Downlink
- DU: Distributed Unit
- eMBB: Enhanced Mobile Broadband

- eNB: Evolved Node B
- gNB: Next Generation Node B
- GPS: Global Positioning System
- HDD: Hard Disk Drive
- IoT: Internet of Things
- LMF: Location Management Function
- LTE: Long-Term Evolution
- LTE-A: Long-Term Evolution Advanced
- MEMS: Micro Electrical Mechanical System
- MIMO: Multiple Input Multiple Output
- mMTC: Massive Machine Type Communication
- NE: Network Entity
- NG: Next Generation
- NG-eNB: Next Generation Evolved Node B
- NG-RAN: Next Generation Radio Access Network
- NR: New Radio
- PDA: Personal Digital Assistance
- PRS: Positioning Reference Signal
- QCL: Quasi Co-location
- QoS: Quality of Service
- RAM: Random Access Memory
- RAN: Radio Access Network
- RAT: Radio Access Technology
- RF: Radio Frequency
- ROM: Read-Only Memory
- RRC: Radio Resource Control
- RSTD: Reference Signal Time Difference
- SCI: Sidelink Control Information
- SL: Sidelink
- SLPP: Sidelink Positioning Protocol
- TDOA: Time Difference of Arrival
- UE: User Equipment
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network

## Claims

1. An apparatus comprising:
means for receiving, from a user equipment, at least one indication indicating at least one sidelink positioning reference signal resource that is combinable;
means for determining, based on the at least one indication, a plurality of combinable sidelink positioning reference signal resources;
means for performing at least one sidelink positioning measurement utilizing the plurality of combinable sidelink positioning reference signal resources; and
means for transmitting, to the user equipment, a report comprising the at least one sidelink positioning measurement and at least one of the following: at least one used sidelink positioning reference signal resource indication or at least one slot index associated with the sidelink positioning measurement.

2. The apparatus of claim 1, wherein performing sidelink positioning measurement comprises combining a plurality of measurement samples associated with the plurality of combinable sidelink positioning reference signal resources.

3. The apparatus of claim 1 or 2, further comprising:
means for receiving at least one resource identity associated with the at least one sidelink positioning reference signal resource that is combinable.

4. The apparatus of any of claims 1-3, wherein the at least one indication comprises at least one combining flag associated with at least one sidelink positioning reference signal resource.

5. The apparatus of claim 4, wherein the at least one combining flag is associated with at least one sidelink positioning reference signal resource configuration.

6. The apparatus of any of claims 1-5, wherein at least two different sidelink positioning reference signal resources associated with a same flag index are configured to enable or allow the apparatus to combine a plurality of measurement samples associated with the at least associated two different sidelink positioning reference signal resources.

7. The apparatus of any of claims 1-6, wherein the at least one indication comprises at least one time window associated with at least one sidelink positioning reference signal resource with the same identifier that are combinable.

8. The apparatus of claim 7, wherein the at least one time window associated with at least one sidelink positioning reference signal resource with the same identifier is combinable within the at least one time window resource.

9. The apparatus of any of claims 1-8, wherein the at least one indication comprises at least one reference sidelink positioning reference signal resource for at least one sidelink positioning reference signal resource.

10. The apparatus of claim 9, wherein at least two different sidelink positioning reference signal resources associated with a same reference sidelink positioning reference signal resource are configured to enable or allow the apparatus to combine a plurality of measurement samples associated with the at least associated two different sidelink positioning reference signal resources.

11. The apparatus of any of claims 1-10, wherein the at least one report comprises at least one set of reference signal time difference, a sidelink time difference measurement, a sidelink angle of arrival measurement, sidelink positioning signal resource identifier, and slot.

12. An apparatus comprising:
means for transmitting, to a user equipment, at least one indication indicating at least one sidelink positioning reference signal resource that is combinable; and
means for receiving, from the user equipment, a report comprising at least one sidelink positioning measurement and at least one of the following: at least one sidelink positioning reference signal resource indication or at least one slot index associated with the sidelink positioning measurement.

13. The apparatus of claim 12, wherein the at least one indication comprises at least one of: at least one combining flag associated with at least one sidelink positioning reference signal resource, at least one time window associated with at least one sidelink positioning reference signal resource with the same identifier that are combinable, or at least one reference sidelink positioning reference signal resource for at least one sidelink positioning reference signal resource.

14. The apparatus of claim 12 or 13, wherein the at least one report comprises at least one set of reference signal time difference, a sidelink time difference measurement, a sidelink angle of arrival measurement, sidelink positioning signal resource identifier, and slot.

15. A method comprising:
receiving, from a user equipment, at least one indication indicating at least one sidelink positioning reference signal resource that is combinable;
determining, based on the at least one indication, a plurality of combinable sidelink positioning reference signal resources;
performing at least one sidelink positioning measurement utilizing the plurality of combinable sidelink positioning reference signal resources; and
transmitting, to the user equipment, a report comprising the at least one sidelink positioning measurement and at least one of the following: at least one used sidelink positioning reference signal resource indication or at least one slot index associated with the sidelink positioning measurement.
